# FASCICULE DE BREVET EUROPEEN

(11) **EP 2 326 856 B1**
(45) Date de publication et mention de la délivrance du brevet: **19.04.2017**
(21) Numéro de dépôt: 09737041.5
(22) Date de dépôt: 01.09.2009
(51) Int. Cl.: F16F 9/32

(54) **DETECTEUR DE SURPRESSION ET DE TALONNAGE POUR AMORTISSEUR OU SIMILAIRE**
ÜBERDRUCK- UND ANSCHLAGDETEKTOR FÜR EINEN STOSSDÄMPFER ODER DERGLEICHEN
OVERPRESSURE AND HEELING DETECTOR FOR A SHOCK ABSORBER OR THE LIKE

(30) Priorité: 12.09.2008 FR 0805010
(43) Date de publication de la demande: 01.06.2011
(73) Titulaire: Safran Landing Systems, 78140 Vélizy-Villacoublay (FR)
(72) Inventeur: MARTIN, Pascal, F-91650 Breuillet (FR); DUCOS, Dominique, F-91600 Savigny Sur Orge (FR)
(74) Mandataire: Parzy, Benjamin Alain
(86) Numéro de dépôt international: PCT/FR2009/001049
(87) Numéro de publication internationale: WO 2010/029224

(56) Documents cités:
- EP-A- 0 733 895
- EP-A- 1 184 251
- EP-A2- 1 992 931
- FR-A- 2 821 400
- US-A- 3 952 691
- US-A- 5 351 562
- US-A- 5 458 368

## Description

L'invention est relative à un détecteur de surpression et de talonnage pour amortisseur, notamment un amortisseur d'atterrisseur d'aéronef.

### ARRIERE-PLAN TECHNOLOGIQUE

Les aéronefs sont susceptibles de subir des atterrissages, durs, c'est-à-dire des atterrissages à une vitesse verticale supérieure à celle retenue pour le dimensionnement des atterrisseurs. Les amortisseurs des atterrisseurs peuvent alors subir une surpression lors de laquelle la pression à l'intérieur de l'amortisseur devient supérieure à une pression de dimensionnement de l'amortisseur, voire un talonnage lors duquel les deux parties télescopiques de l'amortisseur viennent en butée interne. D'autres circonstances qu'un atterrissage dur peuvent conduire à une surpression ou un talonnage. En particulier, des cas de surcharge de l'aéronef, ou encore des cas de mauvais conditionnement de l'amortisseur (niveau d'huile ou gonflage inadapté) peuvent conduire à de tels événements.

Il importe de détecter ces évènements qui peuvent conduire à la longue à une fragilisation de l'amortisseur, voire à sa détérioration.

On connaît des détecteurs de surpression comportant un corps creux définissant une chambre qui est mise en communication avec l'intérieur d'un amortisseur et qui est fermée par un piston coulissant à étanchéité, le piston étant retenu en position à l'encontre de la pression régnant dans l'amortisseur par un moyen de retenue à seuil. Lorsque la pression dans l'amortisseur augmente et dépasse le seuil du moyen de retenue, ce dernier lâche et libère le piston qui est poussé sous l'effet de la pression vers une position d'indication de la surpression.

Le piston peut posséder un témoin qui devient visible lorsque le piston est poussé, ou alors actionner un capteur qui délivre un signal électrique indiquant le dépassement du seuil de surpression.

Le talonnage est en général détecté par un micro contact disposé soit à l'intérieur de l'amortisseur, soit à l'extérieur de celui-ci, pour être actionné lorsque les deux parties télescopiques de l'actionneur se rapprochent au point qu'un talonnage soit sinon inévitable, du moins très proche.

Ainsi, le document US5351562 décrit un indicateur de pression selon le préambule de la revendication 1. Le document FR2821400 décrit quand à lui un dispositif de détection du talonnage.

### OBJET DE L'INVENTION

L'invention a pour objet un unique détecteur déclenchant indifféremment en cas de surpression ou en cas de talonnage.

### BREVE DESCRIPTION DE L'INVENTION

En vue de la réalisation de ce but, on propose selon l'invention un détecteur comportant un corps creux dans lequel coulisse à étanchéité un piston destiné à être soumis à une pression par l'intermédiaire d'une entrée du corps en communication avec une enceinte dans laquelle règne ladite pression, le piston étant retenu en position à l'encontre de la pression par un moyen de retenue à seuil adapté à libérer le piston lorsque la pression atteint ou dépasse ledit seuil de sorte que le piston soit poussé sous l'effet de la pression vers une position d'indication, et dans lequel le piston est solidaire d'un doigt qui saille de l'entrée du corps pour pouvoir être poussé à l'encontre du moyen de retenue à seuil.

Ainsi, le piston peut être actionné par la pression qui atteint ou dépasse le seuil de pression, mais il peut également être actionné par une poussée sur le doigt d'une intensité suffisante pour vaincre le moyen de retenue. Il suffit dès lors de placer judicieusement le détecteur de l'invention sur l'amortisseur, de sorte que le doigt puisse être repoussé par l'une des parties de l'amortisseur coulissant dans l'autre, lorsqu'elle arrive à proximité du talonnage, ou au talonnage.

Ainsi, grâce à un seul et même détecteur, il devient possible de détecter une surpression, mais également un talonnage.

### BREVE DESCRIPTION DES FIGURES

L'invention sera mieux comprise à la lumière de la description qui suit des figures des dessins annexés, illustrant de façon non limitative un mode particulier de réalisation de l'invention, et parmi lesquelles :
- la figure 1 est une vue en coupe longitudinale d'un amortisseur d'aéronef équipé d'un détecteur selon l'invention ;
- la figure 2 est une vue en coupe agrandie du détecteur de la figure 1, alors qu'il n'a pas été déclenché ;
- la figure 3 est une vue en coupe analogue à celle de la figure 2, montrant le détecteur déclenché.

### DESCRIPTION DETAILLEE DES FIGURES

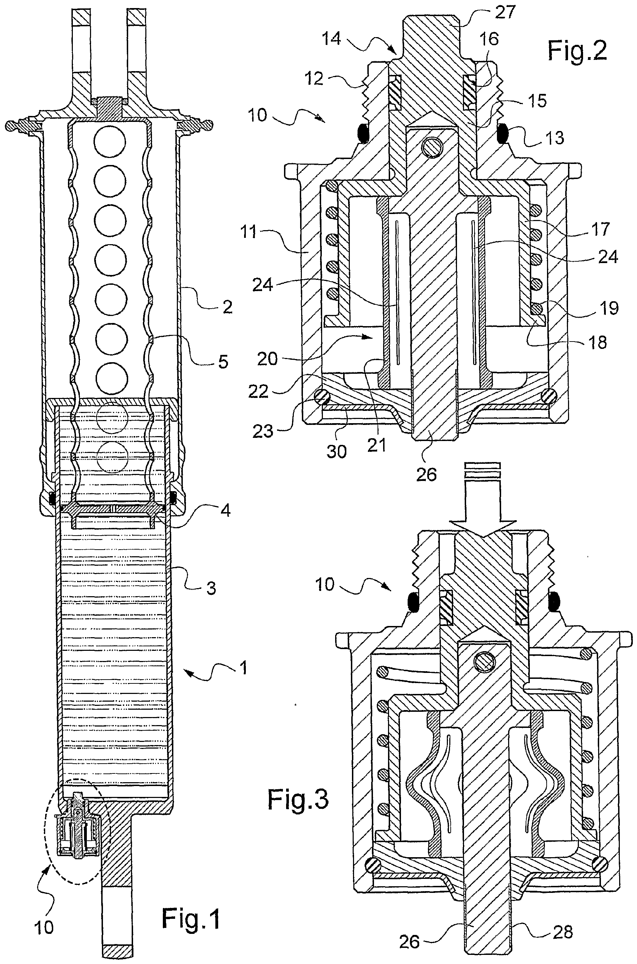

L'invention est ici détaillée en relation avec un atterrisseur d'aéronef, dont on aperçoit à la figure 1 l'amortisseur 1. Il s'agit ici d'un amortisseur indépendant, articulé entre un caisson de l'atterrisseur directement attaché à l'aéronef, et un balancier qui est lui-même articulé sur le caisson et qui porte la ou les roues de l'atterrisseur.

L'amortisseur 1 comporte un cylindre 2 dans lequel une tige 3 est montée à coulissement télescopique étanche. Un diaphragme 4 est porté par un tube ajouré 5, appelé colonne, fixé en fond de cylindre 2, et sépare une première chambre appelée chambre d'huile s'étendant dans la tige 3 jusqu'au diaphragme 4, d'une seconde chambre s'étendant dans le cylindre 2 jusqu'au diaphragme 4, appelée chambre d'air puisque majoritairement remplie de gaz sous pression. Une troisième chambre, dite chambre annulaire, s'étend entre la face externe de la tige 3 et la face interne du cylindre 2. Tout ceci est parfaitement connu et n'est rappelé qu'à titre d'illustration. Un détecteur 10 selon l'invention est disposé sur l'amortisseur 1 au niveau de la base de la tige 3.

Le détecteur 10 est maintenant détaillé en référence à la figure 2. Le détecteur 10 comporte un corps 11 creux généralement de révolution définissant une cavité. Le corps 11 présente un col fileté 12 muni d'un joint d'étanchéité 13 pour son vissage à étanchéité dans un taraudage homologue de la base de la tige 3 de l'amortisseur 1. L'intérieur du col 12 définit un palier de guidage d'un piston 14. Plus précisément, le piston 14 comporte une tige de guidage 15 introduite dans le col 12 et qui porte un joint d'étanchéité 16. La tige de guidage 15 est suivie d'une cloche 17 qui s'épanouit dans la cavité du corps 11 et qui se termine par un redan 18 formant appui d'un ressort hélicoïdal 19 qui s'étend entre le fond de la cavité du corps 11 et le redan 18.

Le détecteur comporte un moyen de retenue 20 du piston 14 en butée contre le fond de la cavité du corps 11. Le moyen de retenu 20 comporte une colonne tarée 21 qui s'étend entre le fond de la cloche 17 et un couvercle 22 qui ferme le corps 11 et qui est retenu sur ce dernier par un jonc 23.

La colonne tarée 21 affecte une forme généralement circulaire dont la partie courante est volontairement affaiblie par la réalisation de fentes longitudinales 24 qui permettent de définir très précisément un seuil d'effort critique à partir duquel la colonne tarée 21 flambe sous l'effet d'un effort de compression. Enfin, le détecteur 10 comporte un moyen d'indication de la position du piston 14, sous la forme d'un témoin 26 qui est solidarisé au piston 14 et qui s'étend pour traverser le couvercle 22. On remarquera que, selon l'invention, le piston 14 est muni d'un doigt 27 qui saille du col 12 et qui, lorsque le détecteur 10 est en place sur la tige 3 de l'amortisseur 1, saille à l'intérieur de la tige 3.

Le fonctionnement du détecteur est le suivant. Le piston 14 est susceptible d'être enfoncé dans le corps 11 lorsque l'effort subi par le piston 14 dépasse l'effort critique de flambement de la colonne tarée 21. Un tel effort peut subvenir si la pression régnant dans la tige 3 de l'amortisseur 1 dépasse une valeur telle que, multipliée par la section de la tige de guidage 15, l'effort résultant atteint ou dépasse l'effort de flambement critique de la colonne tarée 21, ce qui survient lors d'un épisode de surpression à l'intérieur de l'amortisseur. Ainsi, l'effort critique de flambement de la colonne tarée 21, divisé par la section de la tige de guidage 15, définit un seuil de surpression au-delà duquel le détecteur 10 déclenche.

Un tel effort peut encore subvenir si, l'amortisseur étant enfoncé au point que le diaphragme 4 vient accoster puis pousser le doigt 27 du détecteur 10, l'effort exercé par le diaphragme 4 sur le doigt 27 atteint ou dépasse l'effort critique de flambement de la colonne tarée 21, ce qui survient lorsque l'amortisseur est sur le point de talonner. Ainsi, l'effort critique de flambement de la colonne tarée 21 définit directement le seuil de talonnage au-delà duquel le détecteur 10 déclenche.

Comme illustré à la figure 3 sur laquelle la colonne tarée 21 est illustrée flambée, le flambement de la colonne tarée 21 libère le piston 14 qui, poussé par le ressort 19, se déplace vers une position d'indication illustrée ici dans laquelle le témoin 26 dépasse maintenant franchement du couvercle 22. Son extrémité est ici recouverte d'un revêtement de couleur 28 de sorte que son dépassement soit particulièrement visible.

Selon un aspect particulier de l'invention, le détecteur 10 est ici rendu inviolable de sorte qu'il ne peut être réinitialisé par remplacement de la colonne tarée 21 flambée par une colonne 21 neuve. A cet effet, le couvercle 22 est recouvert d'une tôle sertie 30 qui recouvre le jonc 23, empêchant ainsi tout démontage du couvercle et donc tout accès à la colonne tarée 21. Il convient dès lors de remplacer le détecteur par un nouveau détecteur, non déclenché, ce qui impose une dépose de l'amortisseur puisque celui-ci doit être dégonflé et vidangé au préalable.

On remarquera que le seuil de déclenchement en surpression et le seuil de déclenchement en talonnage dépendent tous deux de l'effort critique de flambage de la colonne tarée 21, mais que le seuil de déclenchement en surpression dépend également de la section de la tige de guidage 15. En jouant sur ces deux paramètres, il est possible de concevoir un détecteur dont le seuil de surpression et le seuil de talonnage sont choisis de façon arbitraire.

L'invention n'est bien sûr pas limitée à ce qui vient d'être décrit, mais englobe au contraire toute variante entrant dans le cadre défini par les revendications.

En particulier, bien que l'on ait indiqué que le déclenchement du détecteur soit matérialisé par un témoin visuel dépassant du détecteur, on pourra bien sûr exploiter le mouvement du piston pour actionner un contact électrique permettant d'envoyer un signal électrique de détection d'évènement, en remplacement, ou mieux, en parallèle du témoin visuel.

Bien que l'on ait indiqué que le moyen de retenue à seuil comprenne ici une colonne tarée qui flambe pour un effort critique de flambement déterminé, on pourra utiliser tout autre dispositif de retenue à seuil, comme une chambre d'huile fermée par une soupape tarée qui s'ouvre lorsque la pression dans la chambre atteint un seuil critique.

## Revendications

1. Détecteur de surpression et de talonnage pour amortisseur ou similaire, le détecteur comportant un corps creux (11) dans lequel coulisse à étanchéité un piston (14) destiné à être soumis à une pression par l'intermédiaire d'une entrée (12) du corps en communication avec une enceinte dans laquelle règne ladite pression, le piston étant retenu en position à l'encontre de la pression par un moyen de retenue à seuil (21) adapté à libérer le piston lorsque la pression atteint ou dépasse ledit seuil de sorte que le piston soit poussé sous l'effet de la pression vers une position d'indication, et dans lequel le piston est solidaire d'un doigt (27) qui saille de l'entrée du corps pour pouvoir être poussé à l'encontre du moyen de retenue à seuil, **caractérisé en ce que** le moyen de retenue à seuil est une colonne tarée (21) conçue pour flamber pour un effort critique de flambement déterminé.

2. Détecteur selon la revendication 1, dans lequel le piston est associé à un témoin visuel (26) qui saille du corps du détecteur lorsque le piston a été poussé.

3. Détecteur selon la revendication 1, dans lequel le moyen de retenue et le piston sont enfermés dans une partie du corps (11) inviolable de sorte que le remplacement du moyen de retenue soit impossible.

4. Détecteur selon la revendication 3, dans lequel la partie du corps recevant le piston et le moyen de retenue est fermée par un couvercle(22) retenu par un jonc (23), le jonc étant lui-même recouvert par une tôle (30) sertie.

## Patentansprüche

1. Überdruck- und Durchschlagdetektor für einen Stoßdämpfer oder dergleichen, wobei der Detektor einen hohlen Körper (11) umfasst, in dem auf dichte Weise ein Kolben (14) gleitet, der dazu bestimmt ist, über einen Einlass (12) des Körpers unter Druck gesetzt zu werden, der in Verbindung mit einem abgeschlossenen Raum steht, in dem dieser Druck herrscht, wobei der Kolben entgegen dem Druck über ein Schwellenrückhaltemittel (21) in Position gehalten wird, das dazu geeignet ist, den Kolben freizugeben, wenn der Druck die Schwelle erreicht oder übersteigt, so dass der Kolben unter der Wirkung des Druckes in eine Anzeigeposition gedrückt wird, und wobei der Kolben fest mit einem Finger (27) verbunden ist, der aus dem Einlass des Körpers vorsteht, um entgegen dem Schwellenrückhaltemittel gedrückt werden zu können, **dadurch gekennzeichnet, dass** das Schwellenrückhaltemittel eine geeichte Säule (21) ist, die so konzipiert ist, dass sie bei einer vorgegebenen kritischen Knickkraft knickt.

2. Detektor nach Anspruch 1, bei dem der Kolben mit einer visuellen Anzeige (26) in Verbindung steht, die aus dem Körper des Detektors vorsteht, wenn der Kolben gedrückt wurde.

3. Detektor nach Anspruch 1, bei dem das Rückhaltemittel und der Kolben in einem gegen Eingriffe gesicherten Teil des Körpers (11) eingeschlossen sind, so dass der Austausch des Rückhaltemittels unmöglich ist.

4. Detektor nach Anspruch 3, bei dem der Teil des Körpers, der den Kolben und das Rückhaltemittel aufnimmt, von einem Deckel (22) verschlossen ist, der von einem Ring (23) gehalten wird, wobei der Ring selbst von einem gequetschten Blech (30) abgedeckt wird.

## Claims

1. An overpressure and bottoming detector for a shockabsorber or the like, the detector including a hollow body (11) inside which a piston (14) slides sealingly and that is designed to be subjected to a pressure via an inlet (12) of the body that is in communication with an enclosure inside which said pressure exists, the piston being retained in position against the pressure by threshold retaining means (21) adapted to release the piston when the pressure reaches or exceeds said threshold in such a manner that the piston is pushed under the effect of the pressure towards an indication position, and wherein the piston is secured to a pin (27) that projects from the inlet of the body so as to be capable of being pushed against the threshold retaining means, **characterized in that** the threshold retaining means comprise a rated column (21) designed to buckle at a determined critical buckling force.

2. A detector according to claim 1, wherein the piston is associated with a visual indicator (26) that projects from the body of the detector when the piston has been pushed.

3. A detector according to claim 1, wherein the retaining means and the piston are enclosed inside a portion of the body (11) that is tamperproof in that replacing the retaining means is impossible.

4. A detector according to claim 3, wherein the portion of the body receiving the piston and the retaining means is closed by a lid (22) retained by a retainer ring (23), the ring itself being covered by a crimped metal sheet (33) .
